(19) **Europäisches Patentamt European Patent Office Office européen des brevets**

(11) **EP 1 446 296 B1**

(12) **FASCICULE DE BREVET EUROPEEN**

(45) Date de publication et mention de la délivrance du brevet:
**30.06.2010 Bulletin 2010/26**

(51) Int Cl.:
***B60C 11/24*** *(2006.01)* ***B60C 19/00*** *(2006.01)*
***G01M 17/02*** *(2006.01)*

(21) Numéro de dépôt: **02777261.5**

(22) Date de dépôt: **30.09.2002**

(86) Numéro de dépôt international:
**PCT/EP2002/010936**

(87) Numéro de publication internationale:
**WO 2003/031208 (17.04.2003 Gazette 2003/16)**

(54) **PROCEDE DE MESURE EN CONTINU DE L'USURE D'UNE ENVELOPPE DE PNEUMATIQUE**

VERFAHREN ZUM KONTINUIERLICHEN MESSEN DER ABNUTZUNG EINES REIFENS

METHOD FOR THE CONTINUOUS MEASUREMENT OF WEAR IN RELATION TO A TYRE CASING

(84) Etats contractants désignés:
**AT BE BG CH CY CZ DE DK EE ES FI FR GB GR IE IT LI LU MC NL PT SE SK TR**

(30) Priorité: **02.10.2001 FR 0112884**

(43) Date de publication de la demande:
**18.08.2004 Bulletin 2004/34**

(73) Titulaires:
• **Société de Technologie Michelin 63000 Clermont-Ferrand (FR)**
• **Michelin Recherche et Technique S.A. 1763 Granges-Paccot (CH)**

(72) Inventeurs:
• **POULBOT, Valéry F-63430 Les Martres D'artiere (FR)**
• **ROBERT, Michel F-63200 Cellule (FR)**

(74) Mandataire: **Dequire, Philippe Jean-Marie Denis M.F.P. Michelin, SGD/LG/PI-F35-Ladoux 63040 Clermont-Ferrand Cedex 09 (FR)**

(56) Documents cités:
**WO-A-01/64460          DE-A- 19 745 734**
**DE-A- 19 930 046**

## Description

La présente invention concerne un procédé de mesure en continu de l'usure d'une enveloppe de pneumatique, un élément d'une sculpture de bande de roulement pour enveloppe de pneumatique qui est pourvu de moyens permettant de mesurer en continu l'usure dudit élément lors du roulage de l'enveloppe sur un sol de roulage, une bande de roulement comportant ledit élément, et une enveloppe de pneumatique comportant cette bande de roulement. L'invention est utilisable avec un ensemble monté pour véhicule automobile et un tel véhicule comportant des moyens pour mesurer en temps réel et en continu l'usure de ladite enveloppe.

Il est connu de pourvoir de détecteurs d'usure les sculptures de bande de roulement des pneumatiques pour véhicules automobiles.

Le document de brevet allemand DE-A-197 45 734, conforme au préambule de la revendication 1, divulgue (voir Figs. 2 et 3) un pneumatique dont la bande de roulement comporte dans sa masse une pluralité de fils métalliques qui forment des boucles électriquement conductrices s'étendant respectivement à des hauteurs différentes à l'intérieur d'une barette de sculpture de cette bande de roulement et qui sont reliés à un circuit de détection en dessous de ladite barette. Lors du roulage d'un véhicule équipé de ce pneumatique, ces boucles sont coupées l'une après l'autre pour former des interrupteurs ouverts, et le circuit de détection délivre un signal représentatif de ces coupures à une unité d'évaluation présente dans le véhicule.

Un inconvénient majeur de ce détecteur d'usure réside dans le fait que la détection d'usure est effectuée d'une manière discontinue, du fait qu'elle est fonction du nombre de boucles successivement coupées (i.e. d'interrupteurs ouverts).

Un autre inconvénient de ce détecteur d'usure est qu'il apparaît très difficile pour un homme du métier de le fabriquer de façon précise.

On appelle « partie fixe » d'un véhicule, dans le cadre de la présente description, le châssis du véhicule et les biellettes de suspension par opposition aux « parties tournantes » qui comprennent les roues, enveloppes de pneumatiques et les moyeux.

Un but de la présente invention est de proposer un procédé de mesure en continu de l'usure d'une enveloppe de pneumatique, c'est-à-dire qui permette de la mesurer à chaque instant, que ce soit lors du roulage d'un véhicule équipé de cette enveloppe ou bien à l'arrêt dudit véhicule. Ce but est atteint grâce au procédé de la revendication 1.

Selon l'invention, ce procédé consiste à réaliser une mesure de capacité ou de résistance électrique à l'intérieur d'un élément de sculpture de ladite enveloppe, et à en déduire la hauteur dudit élément par une relation reliant ladite capacité ou ladite résistance à ladite hauteur.

De préférence, ledit procédé consiste à utiliser à titre d'élément de sculpture un élément tel que ladite capacité ou ladite résistance sont directement proportionnelles à la hauteur dudit élément. En d'autres termes, ladite hauteur est alors une fonction linéaire de ladite capacité ou de ladite résistance.

Il en résulte que le module d'acquisition ne requiert pas d'algorithme complexe (fonction de transfert linéaire) pour mesurer la hauteur de l'élément de sculpture.

Par élément de sculpture, on entend dans la présente description tout élément en relief de la bande de roulement qui est destiné à être en contact avec le sol de roulage, à un moment ou à un autre (i.e. dès le début du roulage, ou après un début d'usure de cet élément). Cet élément peut ainsi être constitué d'un pain, par exemple de forme sensiblement parallélépipédique ou cylindrique, ou d'un « rib » ou nervure circonférentielle de section transversale variable (i.e. s'étend sur tout ou partie de la circonférence de la bande de roulement).

Selon un exemple de réalisation de l'invention, ledit procédé consiste à réaliser cette mesure de capacité ou de résistance en prévoyant à l'intérieur de l'enveloppe un module électronique d'acquisition qui est connecté à l'élément de sculpture en dessous de ce dernier.

Selon un premier mode de réalisation de l'invention dans lequel ladite enveloppe équipe un véhicule automobile et est montée sur une roue, ledit procédé consiste essentiellement à réaliser une mesure de capacité relative audit élément de sculpture, en déterminant la fréquence d'accord d'un circuit résonnant passif comportant au moins un condensateur qui est formé par ledit élément de sculpture et une inductance reliée audit condensateur dans la bande de roulement de ladite enveloppe, au moyen d'un circuit d'interrogation qui est monté sur ladite roue ou sur une partie fixe dudit véhicule qui est adjacente à ladite roue.

Selon un second mode de réalisation de l'invention dans lequel ladite enveloppe équipe également un véhicule automobile et est montée sur une roue, ledit procédé consiste essentiellement à réaliser une mesure de capacité relative audit élément de sculpture par téléalimentation dudit module d'acquisition via un circuit d'interrogation monté sur ladite roue ou sur une partie fixe dudit véhicule qui est adjacente à ladite roue, et à transmettre audit circuit d'interrogation la mesure de capacité acquise par ledit module via une inductance couplée dans ladite enveloppe audit module d'acquisition.

Selon un premier exemple de réalisation de l'invention, ledit procédé consiste à mesurer la capacité à l'intérieur dudit élément de sculpture, en prévoyant de former au moins un condensateur dans ledit élément.

Ledit ou chaque condensateur peut être constitué de plaques électriquement conductrices formant des armatures qui sont séparées l'une de l'autre par une composition de caoutchouc électriquement isolante formant un diélectrique pour ledit condensateur. Chacune de ces plaques est constituée d'une composition de caoutchouc électriquement conductrice, par exemple comprenant du noir de carbone en quantité suffisante à titre de charge renforçante.

On notera que l'utilisation d'un condensateur dans ledit élément de sculpture permet de minimiser l'énergie consommée, du fait que la puissance réactive caractérise ce condensateur.

Cette consommation d'énergie peut avantageusement être minimisée en interrogeant ledit module d'acquisition à l'arrêt du véhicule (à chaque démarrage par exemple, en introduisant la clef de contact), au moyen d'une unité centrale montée à l'intérieur dudit véhicule.

Selon un second exemple de réalisation de l'invention, ledit procédé consiste à mesurer la résistance à l'intérieur dudit élément de sculpture, en prévoyant de former au moins une résistance électrique dans ledit élément. Comme précédemment, cette résistance peut comporter des plaques électriquement conductrices (en caoutchouc électriquement conducteur) tels que ceux précités.

On notera que les plaques précitées en relation avec ledit condensateur ou ladite résistance peuvent être planes ou non (de préférence, ces plaques sont planes).

Un autre but du procédé de la présente invention est de proposer un élément d'une sculpture de bande de roulement pour enveloppe de pneumatique, ledit élément comportant une base et un sommet qui sont reliés entre eux par au moins une face latérale et qui définissent la hauteur dudit élément, ledit sommet étant destiné, lors du roulage de l'enveloppe sur un sol de roulage, à être en contact à un moment ou à un autre avec le sol, la structure dudit élément, en relation avec un module d'acquisition auquel il est relié, permettant de mesurer en continu l'usure de la bande de roulement.

A cet effet, un élément de sculpture selon l'invention comporte n couches conductrices mutuellement en regard et de même hauteur (n entier ≥ 2) et n-1 couche(s) isolante(s) qui sont respectivement constituées de compositions de caoutchouc électriquement conductrices et isolante(s), deux couches conductrices adjacentes étant séparées entre elles par une couche isolante qui les recouvre en totalité (cas (i)) ou en partie (cas (ii)) dans une direction normale à celle dudit sommet, de telle manière que ledit élément définisse au moins un condensateur dans ledit cas (i) ou au moins une résistance électrique dans ledit cas (ii) présentant respectivement une valeur de capacité C ou de résistance R représentative de la hauteur dudit élément.

Il en découle que la hauteur de cet élément de sculpture peut être déterminée à chaque instant en roulage à partir de la valeur de capacité du condensateur(s) ou de résistance(s) qu'il forme, cette valeur de capacité ou de résistance pouvant être mesurée par un module électronique d'acquisition qui est connecté à l'élément de sculpture en dessous de ce dernier, à l'intérieur de la bande de roulement.

On notera que dans le cas où ledit élément de sculpture est constitué d'un « rib » ou nervure circonférentielle de section transversale donnée, les couches conductrices et isolantes précités s'étendent sur toute la circonférence de la bande de roulement.

On notera également que le condensateur ou la résistance qui sont formés dans cet élément de sculpture présentent l'avantage d'être constitués des compositions de caoutchouc qui constituent usuellement les bandes de roulement, ce qui facilite la fabrication de ces dernières et minimise ainsi leur coût.

De plus, cette constitution en caoutchouc dudit condensateur ou de ladite résistance confère une cohésion améliorée à la bande de roulement de l'enveloppe correspondante (par rapport à la cohésion entre des parties métalliques et en caoutchouc). Il résulte de cette cohésion améliorée que ladite enveloppe présente des performances, telles que l'usure ou l'adhérence, qui ne sont sensiblement pas dégradées au cours du roulage.

Selon un exemple de réalisation de l'invention, lesdites couches conductrices sont toutes de niveau avec ledit sommet et ladite ou chaque couche isolante est de niveau avec ce sommet dans ledit cas (i) et est en retrait dudit sommet dans ledit cas (ii).

Il en résulte que l'usure dudit élément de sculpture peut être mesurée en continu dès le début du roulage, pour un élément de sculpture en contact avec le sol de roulage dès le début du roulage.

Lesdites couches conductrices, d'une part, et ladite ou chaque couche isolante, d'autre part, sont par exemple de niveau avec ladite base.

Selon un premier mode de réalisation de l'invention, lesdites couches conductrices et isolante(s) sont rectangulaires et empilées l'une sur l'autre, de manière à conférer audit élément une forme parallélépipédique.

Un élément de sculpture selon ce mode de réalisation de l'invention peut former un condensateur, étant constitué de deux couches électriquement conductrices et rectangulaires (parallèles ou non) qui sont appliquées sur une couche électriquement isolante de sorte que ces trois couches soient en regard l'une de l'autre et toutes trois de niveau avec ladite base, d'une part, et avec ledit sommet, d'autre part. Les armatures et le diélectrique de ce condensateur sont respectivement constitués par lesdites couches conductrices et par ladite couche isolante.

A titre de variante, un élément de sculpture selon l'invention peut former plusieurs condensateurs en série, comportant par exemple trois couches électriquement conductrices, identiques et de forme rectangulaire, deux couches électriquement isolantes étant respectivement appliquées entre une première et une seconde paire de couches conductrices adjacentes. Toutes ces couches sont également en regard l'une de l'autre et de niveau avec ladite base, d'une part, et avec ledit sommet, d'autre part. Les armatures et le diélectrique de ce condensateur sont respectivement constitués par lesdites couches conductrices et par lesdites couches isolantes.

Un élément de sculpture selon l'invention peut également former une résistance, comportant deux couches électriquement conductrices, identiques et de forme rectangulaire, qui sont appliquées sur une couche électriquement isolante de telle sorte que ces couches soient en regard l'une de l'autre et soient toutes trois de niveau avec la base seulement de l'élément de sculpture. Ladite couche isolante ne recouvre que partiellement chacune desdites couches conductrices, de manière que ces dernières soient reliées entre elles par une troisième couche conductrice médiane qui prolonge sur une hauteur déterminée (représentant la hauteur d'usure à mesurer) ladite couche isolante en direction du sommet de l'élément de sculpture, les trois couches conductrices étant de niveau avec ledit sommet.

Selon un second mode de réalisation selon l'invention, lesdites couches conductrices et isolante(s) sont concentriques et positionnées l'une à l'intérieur de l'autre en étant fermées sur elles-mêmes ou non. Ces couches sont par exemple cylindriques et positionnées d'une manière coaxiale l'une contre l'autre, de manière à conférer audit élément une géométrie de cylindre ou de partie de cylindre plein.

Un élément de sculpture selon cette variante de l'invention peut par exemple former un condensateur, étant constitué de couches cylindriques et coaxiales de même hauteur, comprenant deux couches électriquement conductrices entre lesquelles est appliquée une couche électriquement isolante, de telle sorte que ces couches soient en regard l'une de l'autre et soient toutes trois de niveau avec ladite base, d'une part, et avec ledit sommet, d'autre part. Les armatures et le diélectrique de ce condensateur sont respectivement constitués par ces couches conductrices et par cette couche isolante.

Il en découle que la hauteur de cet élément de sculpture peut être déterminée en roulage à partir de la valeur de capacité du ou des condensateur(s) qu'il forme, laquelle capacité peut être mesurée par un module électronique d'acquisition qui est connecté à l'élément de sculpture en dessous de ce dernier, à l'intérieur de la bande de roulement.

Une bande de roulement d'enveloppe de pneumatique selon la procédé de l'invention est telle qu'elle comporte au moins un élément de sculpture tel que l'un de ceux précités.

Dans le cas où cet élément de sculpture est constitué d'un condensateur ou d'une résistance formé(e) desdites couches conductrices et isolante(s) en caoutchouc et où la composition de bande de roulement ou de sous-couche de bande de roulement présente une résistivité réduite (par exemple analogue à celle desdites couches conductrices), on notera que cette bande de roulement ou cette sous-couche doit nécessairement comporter en outre une couche isolante qui est disposée radialement sous ledit élément de sculpture de manière à recouvrir intégralement sa base et qui est destinée à isoler électriquement ledit élément de sculpture de ladite composition de bande de roulement ou de sous-couche. Cette couche isolante, avantageusement d'épaisseur réduite, peut par exemple être constituée d'une composition de caoutchouc de résistivité analogue à celle de ladite ou de chaque couche isolante du condensateur ou de la résistance formant ledit élément de sculpture (i.e. de résistivité par exemple comprise entre $10^{12}$ et $10^{15}$ $\Omega$.cm).

Selon une autre caractéristique de l'invention, ladite bande de roulement comporte dans sa masse un module électronique d'acquisition qui est connecté audit ou à chaque élément au-dessous de ce dernier et qui est adapté pour mesurer la valeur de capacité ou de résistance dudit ou desdits condensateur(s) dans ledit cas (i) ou de ladite ou desdites résistance(s) dans ledit cas (ii), et pour en déduire la hauteur dudit ou de chaque élément de sculpture lors du roulage de ladite enveloppe de pneumatique.

A titre d'exemple, ledit module d'acquisition est en outre adapté pour émettre des signaux représentatifs desdites valeurs de capacité ou de résistance en direction d'une unité centrale montée à l'intérieur d'un véhicule équipé de ladite enveloppe de pneumatique.

Selon une variante de réalisation de l'invention, ledit module d'acquisition est en outre adapté pour être téléalimenté par un circuit d'interrogation monté sur ladite roue ou sur une partie fixe dudit véhicule adjacente à ladite roue, et pour coopérer par couplage avec une inductance montée dans ladite bande de roulement de sorte à transmettre audit circuit d'interrogation la mesure de capacité acquise par ledit module.

Une enveloppe de pneumatique selon le procédé de l'invention est telle qu'elle comporte une bande de roulement telle que susmentionnée.

Selon un exemple de réalisation de l'invention, ladite enveloppe est telle que sa bande de roulement comporte à titre d'élément de sculpture selon l'invention un élément constitué d'un « rib » ou nervure circonférentielle, qui s'étend sur toute la circonférence de la bande de roulement.

Selon un autre exemple de réalisation de l'invention, ladite enveloppe est telle que sa bande de roulement comporte à titre d'élément de sculpture selon l'invention un élément constitué d'un « témoin d'usure », i.e. d'un élément par exemple en forme de pain ou de nervure de hauteur sensiblement inférieure à celle des sculptures de la bande de roulement.

Un autre but de la présente invention est de proposer un ensemble monté pour véhicule automobile comportant une enveloppe de pneumatique et une roue sur laquelle est montée ladite enveloppe, ladite enveloppe comportant une bande de roulement comportant des éléments de sculpture comportant chacun une base et un sommet qui sont reliés entre eux par au moins une face latérale et qui définissent la hauteur dudit élément, ledit sommet étant destiné, lors du roulage de ladite enveloppe sur un sol de roulage, à être en contact à un moment ou à un autre avec ledit sol, l'un au moins des éléments de sculpture de ladite enveloppe comportant $\underline{n}$ couches conductrices mutuellement en regard et de même hauteur ($\underline{n}$ entier $\geq 2$) et $\underline{n}$-1 couche(s) isolante(s) qui sont respectivement constituées de compositions de caoutchouc électriquement conductrices et isolante(s), deux couches conductrices adjacentes étant séparées entre elles par une couche isolante qui les recouvre en totalité dans une direction normale à celle dudit sommet, de manière que ledit élément définisse un condensateur présentant une valeur de capacité qui est représentative de la hauteur instantanée dudit élément.

Selon un mode de réalisation « passif » de l'invention (composants passifs dans l'enveloppe), cet ensemble monté est tel que la bande de roulement comporte dans sa masse un circuit résonnant, dont ledit condensateur constitue l'un des éléments. Ce circuit résonnant est tel que sa fréquence de résonance est une fonction de la valeur de capacité dudit condensateur. Par exemple, ce circuit résonnant comporte une inductance, montée en dessous de l'élément de sculpture, et ledit condensateur aux armatures duquel ladite inductance est reliée, le circuit résonnant étant couplé à un circuit d'interrogation qui est monté solidaire de la roue et qui est pourvu d'un générateur d'énergie à balayage de fréquence et de moyens de détection prévus pour détecter la fréquence d'accord entre lesdits circuits, pour déduire de cette fréquence d'accord la valeur de capacité dudit condensateur et pour déduire de cette valeur la hauteur dudit élément de sculpture.

Ledit circuit d'interrogation comporte par exemple un générateur d'énergie à balayage de fréquence, un condensateur, une inductance couplée à ladite inductance dudit circuit résonnant et une résistance, et lesdits moyens de détection de ladite fréquence d'accord sont par exemple montés aux bornes de ladite résistance pour mesurer la tension auxdites bornes.

Selon un autre mode « actif » de réalisation de l'invention (composants actifs dans l'enveloppe, contrairement audit mode « passif »), cet ensemble monté est tel que ladite bande de roulement comporte dans sa masse, d'une part, un module d'acquisition qui est adapté pour mesurer ladite valeur de capacité et qui est téléalimenté par un circuit d'interrogation monté sur ladite roue, et, d'autre part, une inductance couplée audit module d'acquisition pour transmettre audit circuit d'interrogation la mesure de capacité acquise par ledit module, ledit circuit d'interrogation comportant des moyens pour déduire de cette valeur de capacité la hauteur dudit élément de sculpture.

Conformément à ces deux modes de réalisation, on notera que ce circuit d'interrogation peut être par exemple monté sur la valve dont est pourvue la roue (on parle dans ce cas de valve instrumentée), sur un module de mesure de la pression interne à l'enveloppe dont peut être pourvue la roue, plus généralement sur un dispositif existant monté sur la roue, ou bien à un emplacement déterminé dans le sol de roulage.

Un autre but de la présente invention est de proposer un véhicule automobile équipé d'enveloppes de pneumatique dont les bandes de roulement respectives comportent chacune des éléments de sculpture comportant chacun une base et un sommet reliés entre eux par au moins une face latérale et définissant la hauteur dudit élément, ledit sommet étant destiné, lors du roulage de ladite enveloppe sur un sol de roulage, à être en contact à un moment ou à un autre avec le sol, le véhicule comportant des moyens pour mesurer en continu l'usure de l'une au moins des enveloppes, ces moyens n'incluant pas le moindre composant électriquement actif dans l'enveloppe,
l'un au moins des éléments de sculpture de l'une au moins desdites enveloppes comportant n couches conductrices mutuellement en regard et de même hauteur ($n$ entier $\geq 2$) et $n$-1 couche(s) isolante(s) qui sont respectivement constituées de compositions de caoutchouc électriquement conductrices et isolante(s), deux couches conductrices adjacentes étant séparées entre elles par une couche isolante qui les recouvre en totalité dans une direction normale à celle dudit sommet, de manière que ledit élément définisse un condensateur présentant une valeur de capacité qui est représentative de la hauteur dudit élément.

Selon un mode de réalisation de l'invention, ce véhicule est tel que la bande de roulement de ladite ou chaque enveloppe comporte dans sa masse un circuit résonnant comportant une inductance montée en dessous dudit élément de sculpture et ledit condensateur aux armatures duquel ladite inductance est reliée, ledit circuit résonnant étant couplé à un circuit d'interrogation solidaire d'une partie fixe dudit véhicule adjacente à l'enveloppe, ledit circuit d'interrogation étant pourvu d'un générateur d'énergie à balayage de fréquence et de moyens de détection prévus pour détecter la fréquence d'accord entre lesdits circuits, pour déduire de cette fréquence d'accord la valeur de capacité dudit condensateur, et pour déduire de cette valeur de capacité la hauteur de l'élément de sculpture, ledit circuit d'interrogation étant également adapté pour communiquer avec une unité centrale prévue dans l'habitacle dudit véhicule.

On notera que cette enveloppe de pneumatique ne comporte dans sa masse que des composants électriquement passifs.

Selon un exemple de réalisation de l'invention, ledit circuit d'interrogation comporte un générateur d'énergie à balayage de fréquence, un condensateur, une inductance couplée à l'inductance dudit circuit résonnant et une résistance, et lesdits moyens de détection de la fréquence de résonance sont par exemple montés aux bornes de cette résistance pour mesurer la tension à ces bornes.

Selon un autre mode de réalisation de l'invention, ledit véhicule est tel que la bande de roulement de ladite ou chaque enveloppe comporte dans sa masse, d'une part, un module d'acquisition qui est adapté pour mesurer ladite valeur de capacité et qui est téléalimenté par un circuit d'interrogation solidaire d'une partie fixe dudit véhicule adjacente à ladite enveloppe, et, d'autre part, une inductance couplée audit module d'acquisition pour transmettre audit circuit d'interrogation la mesure de capacité acquise par ledit module, ledit circuit d'interrogation comportant des moyens pour déduire de cette valeur de capacité la hauteur dudit élément de sculpture, ledit circuit d'interrogation étant également adapté pour communiquer avec une unité centrale prévue dans l'habitacle dudit véhicule.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, dans lesquels :

la Fig. 1 est une vue schématique et en perspective d'un élément de sculpture selon un premier exemple d'un premier mode de réalisation de l'invention,
la Fig. 2 est une vue schématique et en perspective d'un élément de sculpture selon un second exemple dudit premier mode de réalisation de l'invention,
la Fig. 3 est une vue schématique et en perspective d'un élément de sculpture selon un second mode de réalisation de l'invention,
la Fig. 4 est une vue schématique et en perspective d'un élément de sculpture selon un troisième exemple dudit premier mode de réalisation de l'invention,
la Fig. 5 est une vue schématique et en perspective d'un élément de sculpture selon un exemple ne faisant pas partie de l'invention,
la Fig. 6 est un graphique expérimental illustrant, pour quatre éléments de sculpture qui présentent une même géométrie (représentée en médaillon) identique à celle de la Fig. 1 et qui sont centrés sur un même plan circonférentiel d'une enveloppe de pneumatique, la relation entre la hauteur de chacun de ces quatre éléments de sculpture et la capacité du condensateur constitué par cet élément,
la Fig. 7 est un graphique expérimental illustrant, pour quatre autres éléments de sculpture qui présentent une même géométrie (représentée en médaillon) identique à celle de la Fig. 4 et qui sont centrés sur un même plan circonférentiel d'une enveloppe de pneumatique, la relation entre la hauteur de chacun de ces quatre éléments de sculpture et la valeur de la résistance constituée par cet élément, et
la Fig. 8 est une vue schématique et en perspective d'un système selon un exemple de réalisation selon l'invention pour déterminer la hauteur d'un élément de sculpture.

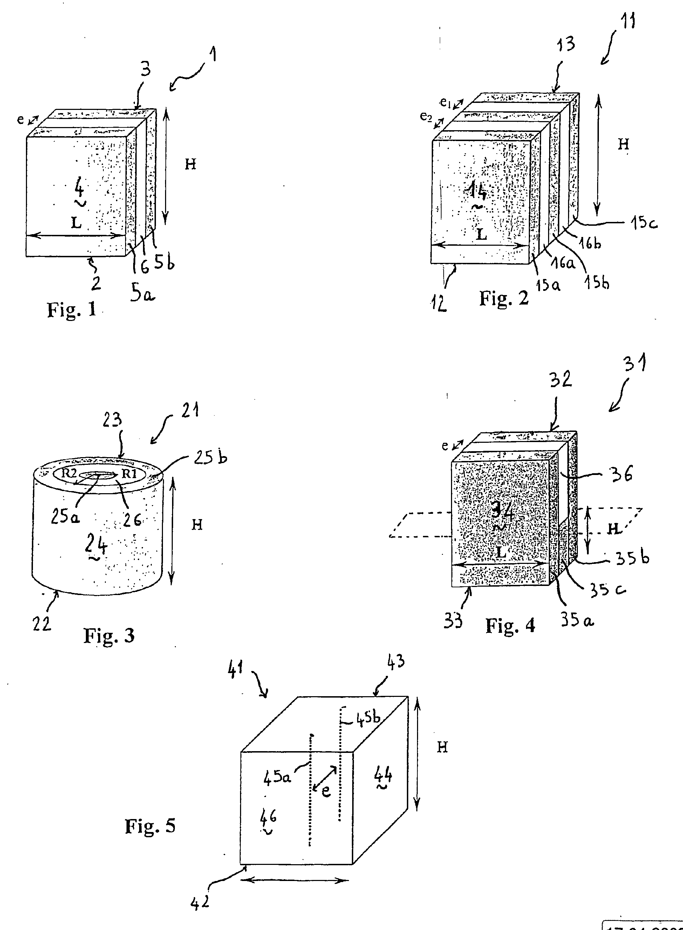

L'élément de sculpture 1 de la Fig. 1 présente dans cet exemple une forme parallélépipédique. Il est délimité par une base 2, un sommet 3 destiné à évoluer sur le sol lors du roulage d'une enveloppe de pneumatique dont la bande de roulement comporte un tel élément 1, et des faces latérales 4 qui relient le sommet 3 à la base 2.

Cet élément de sculpture 1 est constitué de deux couches électriquement conductrices 5a et 5b, identiques et de forme rectangulaire (de hauteur H et de largeur L), qui sont appliquées sur une couche électriquement isolante 6 (d'épaisseur e) de telle sorte que les couches 5a, 5b et 6 soient en regard l'une de l'autre et soient toutes trois de niveau avec ladite base 2, d'une part, et avec ledit sommet 3, d'autre part.

Comme on peut le voir à la Fig. 1, cet empilement de couches 5a, 5b, 6 forme un condensateur, dont les armatures et le diélectrique sont respectivement constitués par les couches conductrices 5a et 5b et par la couche isolante 6.

La capacité C de ce condensateur est donnée par la formule :

$$C = \varepsilon_o\, \varepsilon_r\, \frac{L.\,H}{e} \qquad (1),$$

où $\varepsilon_o$ est la permittivité du vide et $\varepsilon_r$ la permittivité relative du diélectrique.

Il en découle que la hauteur H des éléments de sculpture 1 d'un pneumatique en roulage peut être déterminée à partir de la valeur de la capacité du condensateur correspondant, laquelle capacité pouvant par exemple être mesurée par un module électronique d'acquisition qui est connecté à l'élément 1 au-dessous de ce dernier, à l'intérieur de la bande de roulement.

Ce module d'acquisition peut être adapté pour émettre des signaux représentatifs de ces mesures de capacité en direction d'une unité centrale montée à l'intérieur du véhicule équipé de ce pneumatique et qui est destinée à informer en continu le conducteur de l'usure des éléments de sculpture 1.

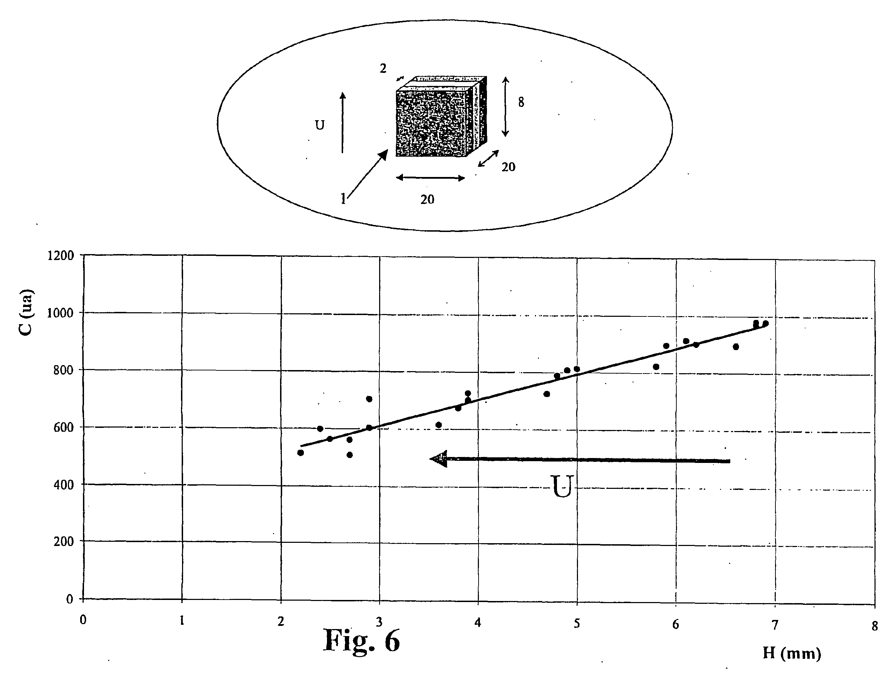

Des essais réalisés sur des enveloppes de pneumatique dont quatre éléments de sculpture 1, alignés dans la direction circonférentielle, présentent la structure de condensateur précitée en relation avec la Fig. 1 confirment d'une manière satisfaisante cette relation de proportionnalité entre la hauteur H (en mm) et la capacité C (exprimée en unité arbitraire), comme le montre le graphique de la Fig. 6 dans lequel les quatre « paquets » de points obtenus correspondent à ces quatre éléments de sculpture 1.

L'élément de sculpture 1 de l'enveloppe qui est représenté en médaillon à la Fig. 6, de forme parallélépipédique, présente une hauteur initiale $H_i$ de 8 mm, une largeur de 20 mm, une profondeur de 20 mm et une couche isolante 6 d'épaisseure égale à 2 mm.

La composition de caoutchouc utilisée dans chacun des quatre éléments de sculpture 1 pour la couche isolante 6 est du type de celle utilisée dans les bandes de roulement de pneumatique de dénomination « MXT ENERGY », c'est-à-dire qu'elle présente une résistivité comprise entre $10^{12}$ et $10^{15}$ $\Omega$.cm. Cette composition est à base d'un coupage d'un copolymère styrène/butadiène préparé en solution (S-SBR) et d'un polybutadiène (BR), et elle comprend 80 pce de silice « ZEOSIL 1165 MP » à titre de charge renforçante.

La composition de caoutchouc utilisée pour les couches conductrices 5a et 5b présente une résistivité voisine de $10^8$ Ω.cm, elle est à base d'un coupage S-SBR / BR, et elle comprend 60 pce de noir de carbone « N234 » à titre de charge renforçante.

La courbe représente les résultats obtenus pour l'usure de l'enveloppe. On a symbolisé le sens de l'usure par la flèche U.

Pour la description des Figs. suivantes, on a utilisé des références numériques augmentées de 10 pour identifier des éléments qui par leur structure ou leur fonction sont analogues aux éléments précités en relation avec la Fig. 1.

L'élément de sculpture 11 de la Fig. 2 se différencie uniquement de l'élément 1 de la Fig. 1 en ce qu'il est constitué de trois couches électriquement conductrices 15a, 15b et 15c, identiques et de forme rectangulaire (de hauteur H et de largeur L), deux couches électriquement isolantes 16a et 16b (d'épaisseurs respectives $e_1$ et $e_2$) étant respectivement appliquées, d'une part, entre les couches conductrices 15a et 15b et, d'autre part, entre les couches conductrices 15b et 15c.

Ces couches 15a, 16a, 15b, 16b, 15c sont également en regard l'une de l'autre et de niveau avec la base 12, d'une part, et avec le sommet 13, d'autre part, de telle sorte que cet empilement forme deux condensateurs disposés en série dont les armatures et le diélectrique sont respectivement constitués par deux couches conductrices adjacentes 15a et 15b ou 15b et 15c et par les couches isolantes 16a ou 16b.

La capacité totale C de ces condensateurs est donnée par la formule :

$$C = \varepsilon_0\, \varepsilon_r\, \frac{L.\,H}{e_1 + e_2} \qquad (2).$$

Comme précédemment, il en découle que la hauteur H des éléments de sculpture 11 d'un pneumatique en roulage peut être déterminée à chaque instant à partir de la valeur de la capacité totale des condensateurs correspondants, laquelle capacité pouvant par exemple être mesurée par un module électronique d'acquisition qui est connecté au condensateur formé par l'élément 11 au-dessous de ce dernier, à l'intérieur de la bande de roulement.

Ce module d'acquisition peut être adapté pour émettre des signaux représentatifs de ces mesures de capacité en direction d'une unité centrale à l'intérieur du véhicule, qui est destinée à informer en continu le conducteur de l'usure des éléments 11.

L'élément de sculpture 21 de la Fig. 3 présente dans cet exemple une forme cylindrique et est délimité par une base 22, un sommet 23, et des faces latérales 24, à l'instar de l'élément 1 de la Fig. 1.

Cet élément de sculpture 21 est constitué de couches cylindriques et coaxiales 25a, 25b, 26 (présentant une même hauteur H), comprenant deux couches électriquement conductrices 25a et 25b, entre lesquelles est appliquée une couche électriquement isolante 26, de telle sorte que ces couches 25a, 25b et 26 soient en regard l'une de l'autre et soient toutes trois de niveau avec la base 22, d'une part, et avec le sommet 23, d'autre part. La couche conductrice radialement interne 25a et la couche isolante 26 présentent respectivement des rayons $R_1$ et $R_2$ (cette couche isolante 26 présentant par conséquent une épaisseur égale à $R_2 - R_1$).

Comme on peut le voir à la Fig. 3, cet empilement de couches 25a, 25b, 26 forme un condensateur, dont les armatures et le diélectrique sont respectivement constitués par les couches conductrices 25a et 25b et par la couche isolante 26.

La capacité C de ce condensateur est donnée par la formule :

$$C = \frac{2\pi\, \varepsilon_0\, \varepsilon_r\, H}{\mathrm{Log}\,(R_2/R_1)} \qquad (3).$$

Comme précédemment, il en découle que la hauteur H des éléments de sculpture 21 d'un pneumatique en roulage peut être déterminée à chaque instant à partir de la valeur de la capacité du condensateur correspondant, laquelle capacité pouvant par exemple être mesurée par un module électronique d'acquisition qui est connecté au condensateur formé par l'élément 21 au-dessous de ce dernier, à l'intérieur de la bande de roulement.

Ce module d'acquisition peut être adapté pour émettre des signaux représentatifs de ces mesures de capacité en direction d'une unité centrale à l'intérieur du véhicule, qui est destinée à informer en continu le conducteur de l'usure des éléments 21.

L'élément de sculpture 31 de la Fig. 4 présente dans cet exemple une forme parallélépipédique, délimitée par une base 32, un sommet 33 et des faces latérales 34.

Cet élément de sculpture 31 comporte deux couches électriquement conductrices 35a et 35b, identiques et de forme rectangulaire (de largeur L), qui sont appliquées sur une couche électriquement isolante 36 (d'épaisseur e et de hauteur $H_0$) de telle sorte que les couches 35a, 35b et 36 soient en regard l'une de l'autre et soient toutes trois de niveau avec la base 32 seulement de l'élément 31.

Comme on peut le voir à la Fig. 4, la couche isolante 36 ne recouvre que partiellement chacune des couches conductrices 35a et 35b, de manière que ces dernières soient reliées entre elles par une troisième couche conductrice médiane 35c (également d'épaisseur e) qui prolonge sur une hauteur H la couche isolante 36 en direction du sommet 33 de l'élément 31, les trois couches conductrices 35a, 35b, 35c étant de niveau avec ledit sommet 33.

Il en résulte de la présence de la couche conductrice médiane 35c et isolante 36 entre les couches conductrices 35a et 35b que l'élément 31 forme une résistance électrique, dont la valeur R satisfait au premier ordre à la formule :

$$R = \rho \frac{e}{L.H} \qquad (4),$$

Où ρ est la résistivité de la couche conductrice 35c.

En définissant l'élément de sculpture 31 comme présentant une hauteur relative vis-à-vis des surfaces immédiatement adjacentes de la bande de roulement du pneumatique (ces surfaces de référence sont représentées en pointillés à la Fig. 4) qui est égale à la hauteur H de ladite couche conductrice médiane 35c, il découle de la formule (4) que la hauteur H des éléments de sculpture 31 d'un pneumatique en roulage peut être déterminée à chaque instant à partir de la valeur de la résistance correspondante, laquelle résistance pouvant par exemple être mesurée par un module électronique d'acquisition qui est connecté à la résistance formée par l'élément 31 au-dessous de ce dernier, à l'intérieur de la bande de roulement.

Ce module d'acquisition peut être adapté pour émettre des signaux représentatifs de ces mesures de résistance en direction d'une unité centrale à l'intérieur du véhicule, qui est destinée à informer en continu le conducteur de l'usure des éléments 31.

On notera que l'usure de l'élément de sculpture 31 correspondant à une valeur nulle de la hauteur H de la couche conductrice médiane 35c (i.e. de la hauteur relative de cet élément 31), est atteinte pour une valeur de résistance R en théorie infinie (très élevée en pratique) et équivaut alors à une capacité de condensateur.

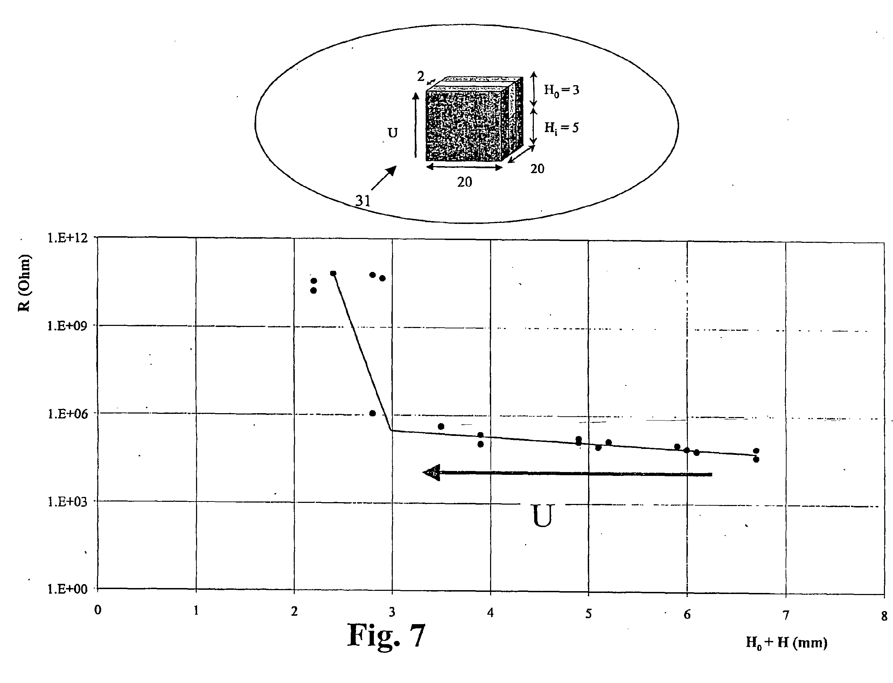

Des essais réalisés sur des enveloppes dont quatre éléments de sculpture 31, alignés dans la direction circonférentielle, présentent la structure de résistance précitée en relation avec la Fig. 4 confirment d'une manière satisfaisante cette relation de proportionnalité entre la hauteur relative H et la résistance R, comme le montre le graphique de la Fig. 7 dans lequel les quatre « paquets » de points obtenus correspondent à ces quatre éléments de sculpture 31.

Dans ce graphique de la Fig. 7, la résistance R est mesurée en fonction de la hauteur totale $H_0+H$ (cet élément de sculpture 31 présente une hauteur relative initiale $H_i$ de 5 mm et une couche isolante 36 d'épaisseure égale à 2 mm et de hauteur $H_0$ égale à 3 mm). On a symbolisé le sens de l'usure par la flèche U.

La composition de caoutchouc utilisée dans cet élément de sculpture 31 pour la couche isolante 36 est du type de celle utilisée dans les bandes de roulement de pneumatique de dénomination « MXT ENERGY », c'est-à-dire qu'elle présente une résistivité comprise entre $10^{12}$ et $10^{15}$ Ω.cm. Cette composition est à base d'un coupage S-SBR/ BR, et elle comprend 80 pce de silice « ZEOSIL 1165 MP » à titre de charge renforçante.

La composition de caoutchouc utilisée pour les couches conductrices 35a, 35b et 35c présente une résistivité voisine de $10^8$ Ω.cm, elle est à base d'un coupage S-SBR /BR, et elle comprend 60 pce de noir de carbone « N234 » à titre de charge renforçante.

L'élément de sculpture 41 de la Fig. 5 présente dans cet exemple une forme parallélépipédique délimitée par une base 42, un sommet 43 et des faces latérales 44.

Cet élément de sculpture 41, de hauteur H et de largeur L, est constitué d'une composition de caoutchouc électriquement isolante 46 dans laquelle sont noyés deux fils identiques 45a et 45b (représentés en pointillés à la Fig. 5) parallèles entre eux et électriquement conducteurs, de manière à former un condensateur dont le diélectrique et les armatures sont respectivement formées par ladite composition isolante 46 et lesdits fils 45a et 45b. Ces derniers sont distants l'un de l'autre d'une distance e, et ils présentent chacun un même diamètre D et une même hauteur H, de manière qu'ils soient de niveau avec la base 42 et le sommet 43 de l'élément 41. La capacité C de ce condensateur est donnée par la formule :

$$C = \frac{\pi \, \varepsilon_0 \, \varepsilon_r \, H}{\text{Arcch} (e/D)} \qquad (5),$$

où Arcch est la fonction argument du cosinus hyperbolique.

Comme précédemment, il en découle que la hauteur H des éléments de sculpture 41 d'un pneumatique en roulage peut être déterminée à chaque instant à partir de la valeur de la capacité du condensateur correspondant, laquelle capacité peut par exemple être mesurée par un module électronique d'acquisition qui est connecté au condensateur formé par l'élément 41 au-dessous de ce dernier, à l'intérieur de la bande de roulement.

Ce module d'acquisition peut être adapté pour émettre des signaux représentatifs de ces mesures de capacité en direction d'une unité centrale à l'intérieur du véhicule, qui est destinée à informer en continu le conducteur de l'usure des éléments 41.

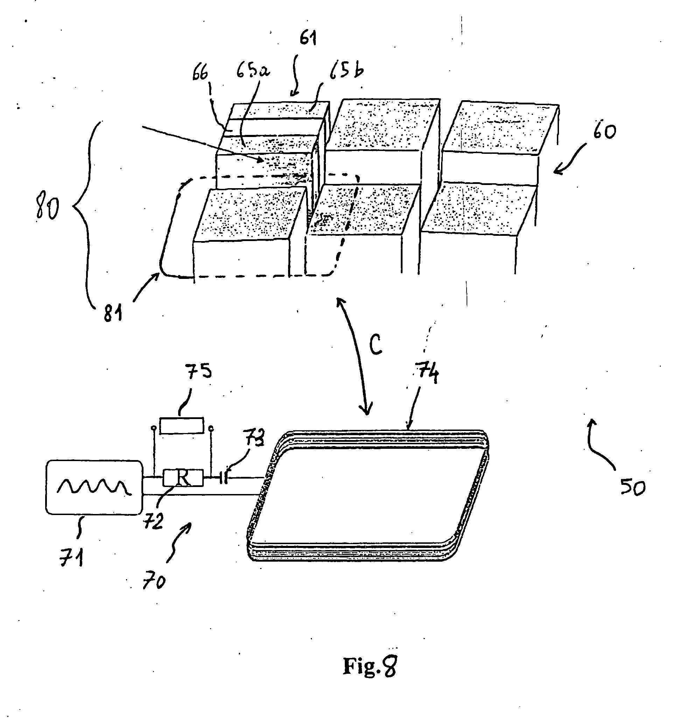

La Fig. 8 illustre un exemple de réalisation selon l'invention d'un système de mesure 50 en temps réel et en continu de l'usure en roulage d'une bande de roulement 60 d'un pneumatique, ce système 50 étant destiné à équiper un véhicule automobile.

Cette bande de roulement 60, représentée partiellement et en perspective à la Fig. 8, comporte une pluralité d'éléments de sculpture 61 dont l'un au moins est conforme à la présente invention et forme un condensateur dont la valeur de capacité C est proportionnelle à la hauteur dudit élément 61. Ce condensateur 61 peut par exemple être du type de celui décrit en référence à l'une des Figs. 1, 2 ou 3 (dans l'exemple de la Fig. 8, il s'agit du condensateur selon la Fig. 1).

On comprendra que plusieurs ou tous les éléments de sculpture 61 de la bande de roulement 60 pourraient être constitués d'un tel condensateur selon l'invention.

Le système de mesure 50 comporte, d'une part, un circuit d'interrogation 70 (ou circuit primaire) et, d'autre un circuit résonnant 80 (ou circuit secondaire) couplé par voie électromagnétique au précédent et monté dans la bande de roulement 60.

Ce circuit d'interrogation 70 est monté solidaire d'une partie fixe du véhicule (non représentée), telle que le garde-boue adjacent au pneumatique, ou bien il est monté solidaire de la roue, par exemple sur la valve de celle-ci ou sur un module de mesure de la pression interne dont la roue est pourvue.

Dans cet exemple de réalisation, le circuit d'interrogation 70 comporte un générateur d'énergie à balayage de fréquence 71, une résistance 72, un condensateur 73 et une antenne 74 formée par une inductance. On notera que ce circuit 70 pourrait être dépourvu de résistance 72, i.e. comportant un condensateur 73 associé à une inductance 74.

Le circuit résonnant 80, électriquement passif, est un circuit « LC » comportant une antenne 81, formée par une inductance qui est reliée aux armatures 65a et 65b du condensateur formé par l'élément de sculpture 61. Cette inductance 81 est située en dessous dudit élément 61, à l'intérieur de la bande de roulement 60, et elle est couplée (voir flèche C) à l'inductance 74 du circuit 70.

Le circuit d'interrogation 70 est pourvu d'un moyen de détection 75 des fréquences d'accord $f_0$ (encore appelées fréquences de résonance $f_r$) entre le circuit résonnant 80 et le circuit d'interrogation 70. Ce moyen de détection 75 est monté aux bornes de la résistance 72, et il est par exemple destiné à mesurer l'amplitude de la tension à ces bornes, laquelle passe par un optimum (absorption d'énergie) lorsqu'il y a accord de fréquence $f_0$ entre les deux circuits.

Ce système 50 fonctionne de la manière suivante pour mesurer la hauteur H de l'élément de sculpture 61.

On fait varier en continu la fréquence d'alimentation du générateur 71, et l'on mesure la tension aux bornes de la résistance 72 pour déterminer la fréquence d'accord $f_0$ du circuit résonnant 80 avec le circuit d'interrogation 70 qui lui est couplé, et l'on déduit de cette valeur $f_0$ la valeur de la capacité C du condensateur formé par l'élément 61, au moyen de la relation liant fréquence d'accord $f_0$ (ou pulsation d'accord $\overline{\omega}_0$) et ladite capacité C :

$$\overline{\omega}_0{}^2 \cdot L\,C = 1$$

(L étant le coefficient d'auto-induction de l'inductance 81),
soit, avec $\overline{\omega}_0 = 2\pi f_0$ :

$$(2\pi f_0)^2 \cdot L\,C = 1,$$

On en déduit la hauteur H précitée en utilisant l'une ou l'autre des formules (1), (2) ou (3) précitées respectivement en relation avec les Figs. 1, 2 et 3.

On notera que le système 50 de mesure de la hauteur H de l'élément de sculpture 61 est adapté pour mesurer d'une manière indirecte la capacité C du condensateur formé par ledit élément 61 (au moyen de la fréquence d'accord $f_0$), contrairement au module d'acquisition précité en relation avec les Figs. 1, 2, 3 et 5 qui effectue des mesures directes de capacité.

De plus, ce système 50 présente l'avantage de ne comporter qu'un circuit électrique passif à l'intérieur du pneumatique, du fait que la détection d'usure est opérée à distance (que ce soit sur une partie fixe du véhicule ou sur la roue).

Le procédé selon l'invention a un avantage décisif de permettre de connaître à tout instant l'usure d'une enveloppe de pneumatique. Bien entendu, il n'est pas nécessaire de réaliser à chaque instant cette mesure de l'usure mais de façon échantillonnée dans le temps.

**Revendications**

1. Procédé de mesure en continu de l'usure d'une enveloppe de pneumatique, consistant à réaliser une mesure de capacité ou de résistance électrique à l'intérieur d'un élément de sculpture (1, 11, 21, 41) de ladite enveloppe, et à en déduire la hauteur dudit élément (1, 11, 21, 41) par une relation reliant ladite capacité ou ladite résistance à ladite hauteur, l'élément de sculpture (1, 11, 21, 31, 61) comportant une base (2, 12, 22, 32) et un sommet (3, 13, 23, 33) qui sont reliés entre eux par au moins une face latérale (4, 14, 24, 34) et qui défmissent la hauteur (H) dudit élément (1, 11, 21, 31, 61), ledit sommet (3, 13, 23, 33) étant destiné, lors du roulage de ladite enveloppe sur un sol de roulage, à être en contact à un moment ou à un autre avec ledit sol,
**caractérisé en ce que** ledit élément (1, 11, 21, 31, 61) comporte $\underline{n}$ couches conductrices (5a, 5b, 15a, 15b, 15c, 25a, 25b, 35a, 35b, 65a, 65b) mutuellement en regard et de même hauteur, $\underline{n}$ étant un entier $\geq 2$ et $\underline{n}$-1 couche(s) isolante(s) (6, 16a, 16b, 26, 36, 66) qui sont respectivement constituées de compositions de caoutchouc électriquement conductrices et isolante(s), deux couches conductrices adjacentes (5a et 15b, 15a et 15b, 15b et 15c, 25a et 25b, 35a et 35b, 65a et 65b) étant séparées entre elles par une couche isolante (6, 16a, 16b, 26, 36, 66) qui les recouvre en totalité dans le cas (i) ou en partie dans le cas (ii), dans une direction normale à celle dudit sommet (3, 13, 23, 33), de telle manière que ledit élément (1, 11, 21, 31, 61) définisse au moins un condensateur dans ledit cas (i) ou au moins une résistance électrique dans ledit cas (ii) présentant respectivement une valeur de capacité ou de résistance qui est représentative de la hauteur (H) dudit élément (1, 11, 21, 31, 61).

2. Procédé de mesure en continu selon la revendication 1, **caractérisé en ce que** lesdites couches conductrices (5a, 5b, 15a, 15b, 15c, 25a, 25b, 35a, 35b, 65a, 65b) sont toutes de niveau avec ledit sommet (3, 13, 23, 33) et **en ce que** ladite ou chaque couche isolante (6, 16a, 16b, 26, 36, 66) est de niveau avec ledit sommet (3, 13, 23, 33) dans ledit cas (i) et est en retrait dudit sommet (3, 13, 23, 33) dans ledit cas (ii).

3. Procédé de mesure en continu selon l'une quelconque des revendications 1 et 2, **caractérisé en ce que** lesdites couches conductrices (5a, 5b, 15a, 15b, 15c, 25a, 25b, 35a, 35b, 65a, 65b), d'une part, et ladite ou chaque couche isolante (6, 16a, 16b, 26, 36, 66), d'autre part, sont de niveau avec ladite base (2, 12, 22, 32).

4. Procédé de mesure en continu selon l'une quelconque des revendications 1 à 3, **caractérisé en ce que** lesdites couches conductrices (5a, 5b, 15a, 15b, 35a, 35b, 65a, 65b) et isolante(s) (6, 16a, 16b, 36, 66) sont rectangulaires et empilées l'une sur l'autre, de manière à conférer audit élément (1, 11, 31, 61) une forme parallélépipédique.

5. Procédé de mesure en continu selon l'une quelconque des revendications 1 à 3, **caractérisé en ce que** lesdites couches conductrices (25a, 25b) et isolante(s) (26) sont concentriques et positionnées d'une manière coaxiale l'une contre l'autre, de manière à conférer audit élément (21) une géométrie de cylindre plein.

6. Procédé de mesure en continu de l'usure d'une enveloppe de pneumatique selon l'une quelconque des revendications 1 à 5, **caractérisé en ce qu'**il consiste à réaliser ladite mesure des valeurs de capacité ou de résistance au moyen d'un module d'acquisition desdites valeurs qui est prévu dans ladite enveloppe.

7. Procédé de mesure en continu de l'usure d'une enveloppe de pneumatique selon l'une quelconque des revendications 1 à 5, l'objet de la revendication 1 étant limité au cas i), ladite enveloppe équipant un véhicule automobile et étant montée sur une roue, **caractérisé en ce qu'**il consiste essentiellement à réaliser une mesure de capacité relative audit élément de sculpture (61), en déterminant la fréquence d'accord d'un circuit résonnant passif (80) comportant au moins un condensateur qui est formé par ledit élément de sculpture (61) et une inductance (81) reliée audit condensateur dans la bande de roulement (60) de ladite enveloppe, au moyen d'un circuit d'interrogation (70) qui est monté sur ladite roue ou sur une partie fixe dudit véhicule qui est adjacente à ladite roue.

8. Procédé de mesure en continu de l'usure d'une enveloppe de pneumatique selon la revendication 6, l'objet de la revendication 1 étant limité au cas i), ladite enveloppe équipant un véhicule automobile et étant montée sur une roue, **caractérisé en ce qu'**il consiste essentiellement à réaliser une mesure de capacité relative audit élément de sculpture (61) par téléalimentation dudit module d'acquisition via un circuit d'interrogation monté sur ladite roue ou sur une partie fixe dudit véhicule qui est adjacente à ladite roue, et à transmettre audit circuit d'interrogation la mesure de capacité acquise par ledit module via une inductance couplée dans ladite enveloppe audit module d'acquisition.

**Claims**

1. Method for the continuous measurement of the wear of a tyre cover, consisting in measuring the capacitance or electrical resistance in a tread pattern element (1, 11, 21, 41) of the said tyre, and deducing from this the height of the said element (1, 11, 21, 41) from an equation relating the said capacitance or resistance to the said height, the tread pattern element (1, 11, 21, 31, 61) comprising a base (2, 12, 22, 32) and a crown (3, 13, 23, 33) connected to one another by at least one lateral face (4, 14, 24, 34) and which define the height (H) of the said element (1, 11, 21, 31, 61), the said crown (3, 13, 23, 33) being intended, when the said tyre is rolling on a rolling surface, to be in contact at one time or another with the said surface, **characterised in that** the said element (1, 11, 21, 31, 61) comprises $\underline{n}$ conducting layers (5a, 5b, 15a, 15b, 15c, 25a, 25b, 35a, 35b, 65a, 65b) face to face with one another and of the same height $\underline{n}$ being an integer $\geq 2$ and $\underline{n}$ - 1 insulating layer(s) (6, 16a, 16b, 26, 36, 66) consisting respectively of electrically conducting and insulating rubber compositions, two adjacent conducting layers (5a and 5b, 15a and 15b, 15b and 15c, 25a and 25b, 35a and 35b, 65a and 65b) being separated from one another by an insulating layer (6, 16a, 16b, 26, 36, 66) which covers them totally in case (i) or partially in case (ii) in a direction normal to the said crown (3, 13, 23, 33), such that the said element (1, 11, 21, 31, 61) defines at least one capacitor in the said case (i) or at least one electrical resistance in the said case (ii), which respectively have a capacitance or resistance value that is representative of the height of the said element (1, 11, 21,31, 61).

2. Method for the continuous measurement according to Claim 1, **characterised in that** the said conducting layers (5a, 5b, 15a, 15b, 15c, 25a, 25b, 35a, 35b, 65a, 65b) are all on a level with the said crown (3, 13, 23, 33) and the said or each insulating layer (6, 16a, 16b, 26, 36, 66) is on a level with the said crown (3, 13, 23, 33) in the said case (i) and is a distance away from the said crown (3, 13, 23, 33) in the said case (ii).

3. Method for the continuous measurement according to any one of Claims 1 and 2, **characterised in that** the said conducting layers (5a, 5b, 15a, 15b, 15c, 25a, 25b, 35a, 35b, 65a, 65b) on the one hand, and the said or each insulating layer (6, 16a, 16b, 26, 36, 66) on the other hand, are on a level with the said base (2, 12, 22, 32).

4. Method for the continuous measurement according to any one of Claims 1 to 3, **characterised in that** the said conducting layers (5a, 5b, 15a, 15b, 15c, 25a, 25b, 35a, 35b, 65a, 65b) and insulating layer (s) (6, 16a, 16b, 36, 66) are rectangular and stacked against one another, so as to confer a parallelepiped shape on the said element (1, 11, 31, 61).

5. Method for the continuous measurement according to any one of Claims 1 to 3, **characterised in that** the said conducting layers (25a, 25b) and insulating layer (26) are concentric and positioned coaxially one against the other, to confer on the said element (21) the geometry of a solid cylinder.

6. Method for the continuous measurement of the wear of a tyre cover according to any one of Claims 1 to 5, **characterised in that** it consists in effecting the said measurement of the capacitance or resistance values by means of an acquisition module for the said values that is provided within the said tyre.

7. Method for the continuous measurement of the wear of a tyre cover according to any one of Claims 1 to 5, the scope of Claim 1 being limited to case (i), the said tyre being fitted to an automobile vehicle and being mounted on a wheel thereof, **characterised in that** it consists essentially in effecting a capacitance measurement relating to the said tread pattern element (61), by determining the in-tune frequency of a passive resonance circuit (80) comprising at least one capacitor formed by the said tread pattern element (61) and an inductance (81) connected to the said capacitor in the tread (60) of the said tyre, by means of an interrogation circuit (70) mounted on the said wheel or on a fixed part of the said vehicle which is close to the said wheel.

8. Method for the continuous measurement of the wear of a tyre cover according to Claim 6, the scope of Claim 1 being limited to case (i), the said tyre being fitted on an automobile vehicle and being mounted on a wheel thereof, **characterised in that** it consists essentially in effecting a capacitance measurement relating to the said tread pattern element (61) by the remote energising of the said acquisition module via an interrogation module mounted on the said wheel or on a fixed part of the vehicle close to the wheel, and transmitting to the said interrogation circuit the capacitance measurement acquired by the said module via an inductance coupled within the said tyre to the said acquisition module.

## Patentansprüche

1. Verfahren zur kontinuierlichen Messung der Abnutzung eines Reifenmantels, das darin besteht, eine Messung der Kapazität oder des elektrischen Widerstands im Inneren eine Profilelements (1, 11, 21, 41) des Mantels zu messen und daraus die Höhe des Elements (1, 11, 21, 41) durch eine Beziehung abzuleiten, die die Kapazität oder den elektrischen Widerstand mit der Höhe verbindet, wobei das Profilelement (1, 11, 21, 31, 61) eine Basis (2, 12, 22, 32) und einen Scheitel (3, 13, 23, 33) aufweist, die durch mindestens eine Seitenfläche (4, 14, 24, 34) miteinander verbunden sind und die die Höhe (H) des Elements (1, 11, 21, 31, 61) definieren, wobei der Scheitel (3, 13, 23, 33) beim Rollen des Mantels auf einem Fahrboden dazu bestimmt ist, im einen oder anderen Moment mit dem Boden in Kontakt zu sein,
**dadurch gekennzeichnet, dass** das Element (1, 11, 21, 31, 61) $\underline{n}$ leitende Schichten (5a, 5b, 15a, 15b, 15c, 25a, 25b, 35a, 35b, 65a, 65b), die einander gegenüberliegen und von gleicher Höhe sind, wobei $\underline{n}$ eine ganze Zahl $\geq 2$ ist, und $\underline{n}$-1 isolierende Schicht (en) (6, 16a, 16b, 26, 36, 66) aufweist, die aus elektrisch leitenden bzw. isolierende(n) Kautschukzusammensetzung(en) bestehen, wobei zwei benachbarte leitende Schichten (5a und 5b, 15a und 15b, 15b und 15c, 25a und 25b, 35a und 35b, 65a und 65b) durch eine isolierende Schicht (6, 16a, 16b, 26, 36, 66) voneinander getrennt sind, die sie im Fall (i) ganz oder im Fall (ii) teilweise in einer Richtung senkrecht zu derjenigen des Scheitels (3, 13, 23, 33) bedeckt, derart, dass das Element (1, 11, 21, 31, 61) im Fall (i) mindestens einen Kondensator oder im Fall (ii) mindestens einen elektrischen Widerstand definiert, der einen Kapazitäts- bzw. Widerstandswert hat, der für die Höhe (H) des Elements (1, 11, 21, 31, 61) repräsentativ ist.

2. Verfahren zur kontinuierlichen Messung nach Anspruch 1, **dadurch gekennzeichnet, dass** die leitenden Schichten (5a, 5b, 15a, 15b, 15c, 25a, 25b, 35a, 35b, 65a, 65b) alle mit dem Scheitel (3, 13, 23, 33) auf gleicher Höhe liegen, und dass die oder jede isolierende Schicht (6, 16a, 16b, 26, 36, 66) im Fall (i) mit dem Scheitel (3, 13, 23, 33) auf gleicher Höhe liegt und im Fall (ii) bezüglich des Scheitels (3, 13, 23, 33) zurückversetzt ist.

3. Verfahren zur kontinuierlichen Messung nach einem der Ansprüche 1 und 2, **dadurch gekennzeichnet, dass** die leitenden Schichten (5a, 5b, 15a, 15b, 15c, 25a, 25b, 35a, 35b, 65a, 65b) einerseits und die oder jede isolierende Schicht (6, 16a, 16b, 26, 36, 66) andererseits mit der Basis (2, 12, 22, 32) auf gleicher Höhe liegen.

4. Verfahren zur kontinuierlichen Messung nach einem der Ansprüche 1 bis 3, **dadurch gekennzeichnet, dass** die leitenden Schichten (5a, 5b, 15a, 15b, 35a, 35b, 65a, 65b) und die isolierende(n) Schicht(en) (6, 16a, 16b, 36, 66) rechteckig und übereinander gestapelt sind, um dem Element (1, 11, 31, 61) eine parallelepipedische Form zu verleihen.

5. Verfahren zur kontinuierlichen Messung nach einem der Ansprüche 1 bis 3, **dadurch gekennzeichnet, dass** die leitenden Schichten (25a, 25b) und die isolierende(n) Schicht(en) (26) konzentrisch und koaxial zueinander positioniert sind, um dem Element (21) eine Geometrie eines massiven Zylinders zu verleihen.

6. Verfahren zur kontinuierlichen Messung der Abnutzung eines Reifenmantels nach einem der Ansprüche 1 bis 5, **dadurch gekennzeichnet, dass** es darin besteht, die Messung der Kapazitäts- oder Widerstandswerte mittels eines Erfassungsmoduls der Werte durchzuführen, das im Mantel vorgesehen ist.

7. Verfahren zur kontinuierlichen Messung der Abnutzung eines Reifenmantels nach einem der Ansprüche 1 bis 5, wobei der Gegenstand des Anspruchs 1 auf den Fall (i) beschränkt ist, wobei der Mantel ein Kraftfahrzeug bestückt und auf ein Rad montiert ist, **dadurch gekennzeichnet, dass** es hauptsächlich darin besteht, eine Kapazitätsmessung bezüglich des Profilelements (61) durchzuführen, indem die Abstimmfrequenz eines passiven Schwingkreises (80), der mindestens einen Kondensator, der vom Profilelement (61) gebildet wird, und eine mit dem Kondensator verbundene Induktivität (81) im Laufstreifen (60) des Mantels aufweist, mittels einer Abfrageschaltung (70) bestimmt wird, die auf das Rad oder auf einen ortsfesten Teil des Fahrzeugs montiert ist, der dem Rad benachbart ist.

8. Verfahren zur kontinuierlichen Messung der Abnutzung eines Reifenmantels nach Anspruch 6, wobei der Gegenstand des Anspruchs 1 auf den Fall (i) beschränkt ist, wobei der Mantel ein Kraftfahrzeug bestückt und auf ein Rad montiert ist, **dadurch gekennzeichnet, dass** es hauptsächlich darin besteht, eine Kapazitätsmessung bezüglich des Profilelements (61) durch Fernspeisung des Erfassungsmoduls über eine Abfrageschaltung durchzuführen, die auf das Rad oder auf einen ortsfesten Bereich des Fahrzeugs montiert ist, der dem Rad benachbart ist, und an die Abfrageschaltung die vom Modul erfasste Kapazitätsmessung über eine im Mantel mit dem Erfassungsmodul gekoppelte Induktivität zu übertragen.

Fig. 1

Fig. 2

Fig. 3

Fig. 4

Fig. 5

Fig. 6

Fig. 7

**Fig.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19745734 A